# FASCICULE DE BREVET EUROPEEN

(11) **EP 4 687 130 B1**
(45) Date de publication et mention de la délivrance du brevet: **09.09.2026**
(21) Numéro de dépôt: 25188338.5
(22) Date de dépôt: 09.07.2025
(51) Int. Cl.: G08G 5/21, G08G 5/25, G08G 5/53, G08G 5/56, G08G 5/78, G08G 5/80

(54) **SYSTÈME ET PROCÉDÉ DE SURVEILLANCE D'UN AÉRONEF PARTICIPANT À UN VOL EN FORMATION**
SYSTEM UND VERFAHREN ZUR ÜBERWACHUNG EINES AN EINEM FORMATIONSFUGEN BETEILIGTEN LUFTFAHRZEUGS
SYSTEM AND METHOD FOR MONITORING AN AIRCRAFT PARTICIPATING IN FORMATION FLIGHT

(30) Priorité: 01.08.2024 FR 2408508
(43) Date de publication de la demande: 04.02.2026
(73) Titulaire: AIRBUS OPERATIONS (S.A.S.), 31060 Toulouse (FR)
(72) Inventeur: ROBIN, Jean-Luc, 31060 TOULOUSE (FR); BERTHIER, Jean-Baptiste, 31060 TOULOUSE (FR); WARTON, Nicolas, 31060 TOULOUSE (FR); PIATKOWSKA, Paulina, 31060 TOULOUSE (FR)
(74) Mandataire: Airbus-OPS SAS

(56) Documents cités:
- EP-A1- 3 422 134
- US-A1- 2017 297 736
- US-A1- 2019 041 875
- US-A1- 2019 041 876

## Description

L'invention est relative au domaine du vol en formation des aéronefs. De façon connue, le vol en formation d'un ensemble d'aéronefs permet de réduire la consommation de carburant de l'ensemble d'aéronefs. Dans un vol en formation, un aéronef dit aéronef suiveur, vole à proximité d'un vortex engendré par un aéronef qu'il suit, dit aéronef leader. Les différents aéronefs participant à un vol en formation volent à proximité les uns des autres en respectant une géométrie déterminée en ce qui concerne les positions relatives des différents aéronefs participant au vol en formation. Il est ainsi important de garantir la sécurité des différents aéronefs participant au vol en formation en prévenant tout risque de collision entre eux. Tous les aéronefs de transport sont équipés d'un système anticollision appelé TCAS (« Traffic Collision Avoidance System » en anglais). Ce système est prévu pour détecter un risque de collision entre aéronefs et pour commander une manœuvre d'évitement lorsqu'un tel risque est détecté.

Lors d'un vol en formation, étant donné que les aéronefs volent à proximité les uns des autres, il serait intéressant de trouver une solution permettant d'avoir une redondance de la surveillance anticollision des aéronefs volant en formation.

Document US 2019/041875 A1 divulgue un procédé et dispositif permettant de surveiller la position d'un aéronef suiveur par rapport à un aéronef de tête lors d'un vol en formation.

### EXPOSE DE L'INVENTION :

La présente invention a notamment pour but d'apporter une solution à ce problème. Elle concerne un système de surveillance d'un aéronef participant à un vol en formation dans lequel un aéronef suiveur vole à proximité d'un vortex engendré par un aéronef leader, l'aéronef correspondant à l'un de l'aéronef suiveur ou de l'aéronef leader, le système de surveillance comprenant de la circuiterie électronique intégrée dans au moins un calculateur avionique de l'aéronef, dans lequel la circuiterie électronique est configurée pour mettre en œuvre de façon répétitive les étapes suivantes pendant la participation de l'aéronef au vol en formation :
- recevoir une information d'altitude barométrique de l'aéronef leader ;
- recevoir une information d'altitude barométrique de l'aéronef suiveur ;
- calculer une différence entre l'altitude barométrique de l'aéronef leader et l'altitude barométrique de l'aéronef suiveur ;
- déterminer une incohérence entre l'altitude barométrique de l'aéronef suiveur et l'altitude barométrique de l'aéronef leader, dans le contexte du vol en formation, si la différence calculée est supérieure à une valeur de hauteur du vortex à une position courante de l'aéronef suiveur, augmentée d'une marge de hauteur ; et
- en cas de détermination d'une telle incohérence, commander l'émission d'une alerte dans le cockpit de l'aéronef.

Lors d'un vol en formation, les différents aéronefs participant à ce vol en formation sont sensés être positionnés les uns par rapport aux autres selon une géométrie particulière telle qu'un aéronef suiveur vole à proximité d'un vortex engendré par un aéronef leader, les différents aéronefs étant suffisamment espacés pour éviter tout risque de collision. Le système de surveillance conforme à l'invention permet de détecter et de signaler une incohérence de la différence calculée entre l'altitude barométrique de l'aéronef leader et l'altitude barométrique de l'aéronef suiveur, par rapport à une différence entre l'altitude de l'aéronef leader et l'altitude de l'aéronef suiveur compatible avec un vol en formation (correspondant au plus à la hauteur du vortex augmentée de la marge de hauteur). Par conséquent, le système permet une surveillance du respect de ladite géométrie particulière par l'aéronef leader et par l'aéronef suiveur. Etant donné que cette géométrie particulière est prévue pour éviter tout risque de collision entre les aéronefs participant au vol en formation, la surveillance par le système du respect de ladite géométrie particulière est ainsi complémentaire de la surveillance anticollision réalisée par le système TCAS. Par conséquent, le système de surveillance conforme à l'invention est redondant du système TCAS.

Selon différents modes de réalisation pouvant être pris isolément ou en combinaison :
- la circuiterie électronique comprend une première partie intégrée dans un système de surveillance anticollision de type TCAS et une deuxième partie indépendante du système de surveillance anticollision de type TCAS, dans lequel l'étape de calcul de la différence entre l'altitude barométrique de l'aéronef leader et l'altitude barométrique de l'aéronef suiveur est mise en œuvre dans la première partie de la circuiterie électronique et l'étape de détermination d'une incohérence entre l'altitude barométrique de l'aéronef suiveur et l'altitude barométrique de l'aéronef leader est mise en œuvre dans la deuxième partie de la circuiterie électronique ;
- la circuiterie électronique est en outre configurée pour mettre en œuvre une étape de réception d'une information d'identification de l'aéronef leader lorsque l'aéronef correspond à l'aéronef suiveur ou une étape de réception d'une information d'identification de l'aéronef suiveur lorsque l'aéronef correspond à l'aéronef leader ;
- la circuiterie électronique est en outre configurée pour déterminer de façon automatique une information d'identification de l'aéronef leader lorsque l'aéronef correspond à l'aéronef suiveur ou une information d'identification de l'aéronef suiveur lorsque l'aéronef correspond à l'aéronef leader, en fonction d'informations reçues de l'aéronef suiveur et de l'aéronef leader ;
- la circuiterie électronique est en outre configurée pour commander un désengagement de la participation de l'aéronef au vol en formation en cas de détermination d'une incohérence entre l'altitude barométrique de l'aéronef suiveur et l'altitude barométrique de l'aéronef leader.

L'invention est également relative à un procédé de surveillance d'un aéronef participant à un vol en formation dans lequel un aéronef suiveur vole à proximité d'un vortex engendré par un aéronef leader, l'aéronef correspondant à l'un de l'aéronef suiveur ou de l'aéronef leader, le procédé comprenant les étapes suivantes mises en œuvre de façon répétitive par de la circuiterie électronique intégrée dans au moins un calculateur avionique de l'aéronef, pendant la participation de l'aéronef au vol en formation :
- recevoir une information d'altitude barométrique de l'aéronef leader ;
- recevoir une information d'altitude barométrique de l'aéronef suiveur ;
- calculer une différence entre l'altitude barométrique de l'aéronef leader et l'altitude barométrique de l'aéronef suiveur ;
- déterminer une incohérence entre l'altitude barométrique de l'aéronef suiveur et l'altitude barométrique de l'aéronef leader, dans le contexte du vol en formation, si la différence calculée est supérieure à une valeur de hauteur du vortex à une position courante de l'aéronef suiveur, augmentée d'une marge de hauteur ; et
- en cas de détermination d'une telle incohérence, commander l'émission d'une alerte dans le cockpit de l'aéronef.

Dans un mode de réalisation, la circuiterie électronique comprend une première partie intégrée dans un système de surveillance anticollision de type TCAS et une deuxième partie indépendante du système de surveillance anticollision de type TCAS. L'étape de calcul de la différence entre l'altitude barométrique de l'aéronef leader et l'altitude barométrique de l'aéronef suiveur est mise en œuvre dans la première partie de la circuiterie électronique et l'étape de détermination d'une incohérence entre l'altitude barométrique de l'aéronef suiveur et l'altitude barométrique de l'aéronef leader est mise en œuvre dans la deuxième partie de la circuiterie électronique.

Dans un mode de réalisation, le procédé comprend en outre une étape de réception d'une information d'identification de l'aéronef leader lorsque l'aéronef correspond à l'aéronef suiveur ou une étape de réception d'une information d'identification de l'aéronef suiveur lorsque l'aéronef correspond à l'aéronef leader.

Dans un autre mode de réalisation, le procédé comprend en outre une étape de détermination automatique d'une information d'identification de l'aéronef leader lorsque l'aéronef correspond à l'aéronef suiveur ou d'une information d'identification de l'aéronef suiveur lorsque l'aéronef correspond à l'aéronef leader, en fonction d'informations reçues de l'aéronef suiveur et de l'aéronef leader.

L'invention est également relative à un aéronef comprenant un tel système de surveillance.

### DESCRIPTION DETAILLEE :

L'invention sera mieux comprise à la lecture de la description qui suit et à l'examen des figures annexées.
La figure 1 est une vue d'un aéronef comprenant un système de surveillance conforme à un mode de réalisation de l'invention.
La figure 2 illustre de façon schématique un système de surveillance d'un aéronef, conforme à un mode de réalisation de l'invention.
La figure 3 illustre de façon schématique un système de surveillance d'un aéronef, conforme à un mode particulier de réalisation de l'invention.
La figure 4 illustre une situation d'un aéronef suiveur par rapport à un aéronef leader.
La figure 5 représente un procédé de surveillance d'un aéronef, conforme à un mode de réalisation de l'invention.

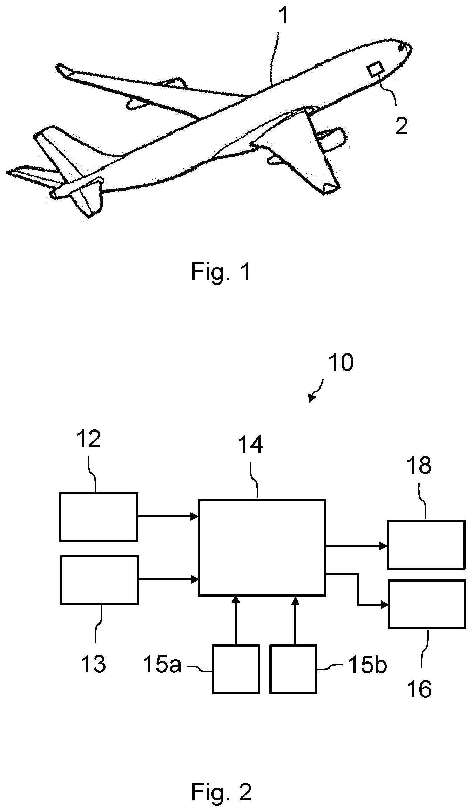

Le système de surveillance 10 représenté sur la figure 2 est installé à bord d'un aéronef tel que l'aéronef 1 représenté sur la figure 1. Lorsqu'il participe à un vol en formation, l'aéronef 1 correspond à l'un parmi un aéronef suiveur 1S ou un aéronef leader 1L participant à ce vol en formation. Ce système de surveillance comprend de la circuiterie électronique 14 intégrée dans au moins un calculateur avionique de l'aéronef, par exemple un calculateur avionique installé dans une baie avionique 2 de l'aéronef 1. La circuiterie électronique 14 est reliée en entrée à une première source d'information 12 configurée pour fournir une information d'altitude barométrique de l'aéronef 1. La première source d'information 12 correspond par exemple à un altimètre de l'aéronef 1 ou à un système avionique de l'aéronef 1 recevant l'information d'altitude barométrique d'un altimètre de l'aéronef 1. La circuiterie électronique 14 est également reliée en entrée à une deuxième source d'information 13 configurée pour fournir une information d'altitude barométrique de l'autre parmi l'aéronef suiveur 1S et l'aéronef leader 1L. Ainsi, lorsque l'aéronef 1 correspond à l'aéronef suiveur 1S, la deuxième source d'information 13 est une source d'information configurée pour fournir une information d'altitude barométrique de l'aéronef leader 1L et lorsque l'aéronef 1 correspond à l'aéronef leader 1L, la deuxième source d'information 13 est une source d'information configurée pour fournir une information d'altitude barométrique de l'aéronef suiveur 1S. Dans un mode de réalisation particulier, la deuxième source d'information 13 correspond à un système TCAS de l'aéronef 1 qui est prévu pour recevoir des valeurs d'altitude barométrique d'aéronefs environnants de l'aéronef 1, ces aéronefs environnants comprenant l'autre parmi l'aéronef suiveur 1S et l'aéronef leader 1L. Ces informations d'altitude barométrique des aéronefs environnants sont par exemple transmises par des transpondeurs desdits aéronefs environnants. La circuiterie électronique 14 est aussi reliée en entrée à une source d'information 15a configurée pour fournir une information de participation de l'aéronef 1 à un vol en formation lorsque l'aéronef 1 participe à un vol en formation. Selon une première alternative, la source d'information 15a correspond à une interface homme-machine du cockpit de l'aéronef configurée pour permettre à un membre d'équipage de l'aéronef de saisir une information de participation de l'aéronef à un vol en formation. Selon une deuxième alternative, la source d'information 15a correspond à un calculateur avionique de l'aéronef 1, en particulier un calculateur de guidage de l'aéronef, configuré pour fournir une information de participation de l'aéronef à un vol en formation lorsqu'un mode de guidage de l'aéronef de type vol en formation est activé. La circuiterie électronique 14 est aussi reliée en sortie à un système d'affichage 18 dans le cockpit de l'aéronef 1, par exemple un système de type CDS (« Cockpit Display System » en anglais).

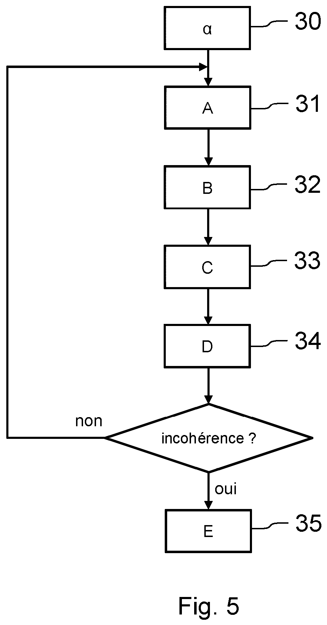

En fonctionnement, lors de l'initialisation d'un vol en formation, les différents aéronefs, dont l'aéronef 1, participant à ce vol en formation se positionnent les uns par rapport aux autres selon une géométrie particulière telle qu'un aéronef suiveur vole à proximité d'un vortex engendré par un aéronef leader, les différents aéronefs étant suffisamment espacés pour éviter tout risque de collision. Lorsque les aéronefs participant au vol en formation sont positionnés de façon stabilisée selon cette géométrie particulière, un mode de guidage de l'aéronef 1 de type vol en formation est engagé. La source d'informations 15a transmet alors à la circuiterie électronique 14 une information de participation de l'aéronef 1 à un vol en formation. De façon avantageuse, cette information indique en outre si l'aéronef 1 participe au vol en formation en tant qu'aéronef suiveur 1S ou en tant qu'aéronef leader 1L. La réception de l'information de participation de l'aéronef 1 au vol en formation correspond à une étape 30 du procédé illustré sur la figure 5. Cette étape est libellée α sur la figure.

A partir du moment où elle est ainsi informée de la participation de l'aéronef 1 au vol en formation, la circuiterie électronique 14 met en œuvre les étapes suivantes de façon répétitive pendant la participation de l'aéronef 1 au vol en formation. Ces étapes sont par exemple répétées selon une fréquence prédéterminée, par exemple de 1Hz.

Dans une étape 31, libellée A sur la figure 5, la circuiterie électronique 14 reçoit une information d'altitude barométrique de l'aéronef leader 1L. Lorsque l'aéronef 1 correspond à l'aéronef suiveur 1S, cette information d'altitude barométrique de l'aéronef leader est reçue de la deuxième source d'information 13. Lorsque l'aéronef 1 correspond à l'aéronef leader 1L, cette information d'altitude barométrique de l'aéronef leader est reçue de la première source d'information 12.

Dans une étape 32, libellée B sur la figure 5, la circuiterie électronique 14 reçoit une information d'altitude barométrique de l'aéronef suiveur 1S. Lorsque l'aéronef 1 correspond à l'aéronef suiveur 1S, cette information d'altitude barométrique de l'aéronef leader est reçue de la première source d'information 12. Lorsque l'aéronef 1 correspond à l'aéronef leader 1L, cette information d'altitude barométrique de l'aéronef leader est reçue de la deuxième source d'information 13.

Bien que l'étape 31 soit représentée sur la figure 5 comme antérieure à l'étape 32, l'ordre chronologique des étapes 31 et 32 n'est pas limitatif de l'invention.

Dans une étape 33, libellée C sur la figure 5, la circuiterie électronique 14 calcule une différence entre l'altitude barométrique de l'aéronef leader 1L et l'altitude barométrique de l'aéronef suiveur 1S. Dans un mode particulier de réalisation, cette différence est calculée en valeur absolue.

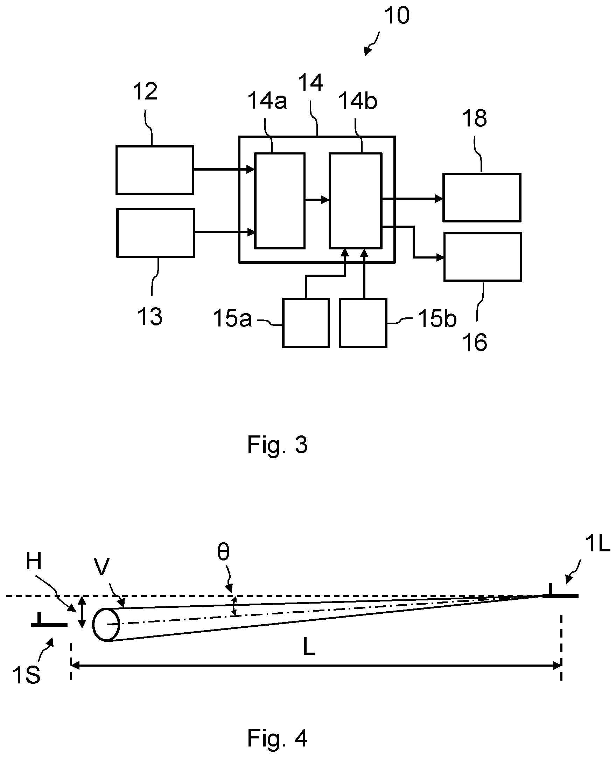

Dans une étape 34, libellée D sur la figure 5, la circuiterie électronique 14 détermine une incohérence entre l'altitude barométrique de l'aéronef suiveur 1S et l'altitude barométrique de l'aéronef leader 1L, dans le contexte du vol en formation, si la différence calculée à l'étape 32 est supérieure à une valeur de hauteur du vortex à une position courante de l'aéronef suiveur, augmentée d'une marge de hauteur. Comme illustré par la figure 4, à une position courante de l'aéronef suiveur 1S relativement à l'aéronef leader 1L, correspondant en particulier à une distance horizontale L entre l'aéronef leader 1L et l'aéronef suiveur 1S, correspond une hauteur de vortex H. De façon avantageuse, la hauteur H tient compte d'une pente θ entre un axe longitudinal du vortex et une droite horizontale correspondant à l'altitude de l'aéronef leader, comme illustré sur la figure 4. La pente θ choisie pour déterminer la hauteur H est par exemple une valeur maximale de la pente de l'axe longitudinal du vortex déterminée à partir d'un modèle. La marge de hauteur est choisie de façon à ne pas déterminer une telle incohérence de façon intempestive du fait de petites variations d'altitude de l'aéronef leader 1 L et/ou de l'aéronef suiveur 1S, ou encore du fait des incertitudes relatives aux informations d'altitude barométrique de l'aéronef leader et de l'aéronef suiveur. Etant donné que, pendant leur participation au vol en formation, l'aéronef leader 1L et l'aéronef suiveur 1S sont sensés voler selon la géométrie particulière précitée, la différence entre leurs altitudes barométriques est sensée correspondre sensiblement à la hauteur de vortex H. Par conséquent, il y a incohérence avec la participation desdits aéronefs au vol en formation si cette différence est supérieure à la hauteur de vortex H augmentée de la marge de hauteur. Par conséquent, le système de surveillance 10 contribue à surveiller le respect de ladite géométrie particulière par l'aéronef leader 1L et par l'aéronef suiveur 1S. Etant donné que cette géométrie particulière est prévue pour éviter tout risque de collision entre les aéronefs participant au vol en formation, la surveillance par le système du respect de ladite géométrie particulière est ainsi complémentaire de la surveillance anticollision réalisée par le système TCAS. Le système de surveillance 10 est ainsi redondant du système TCAS.

Lorsqu'une incohérence entre l'altitude barométrique de l'aéronef suiveur 1S et l'altitude barométrique de l'aéronef leader 1L est déterminée à l'étape 34, dans une étape 35, libellée E sur la figure 5, la circuiterie électronique 14 commande l'émission d'une alerte dans le cockpit de l'aéronef 1 en envoyant une commande appropriée au système d'affichage 18.

De façon avantageuse, la circuiterie électronique 14 est en outre reliée en sortie à un système de guidage 16 de l'aéronef 1, par exemple un calculateur de guidage de type FGS (« Flight Guidance System » en anglais). Lorsqu'une incohérence entre l'altitude barométrique de l'aéronef suiveur 1S et l'altitude barométrique de l'aéronef leader 1L est déterminée à l'étape 34, la circuiterie électronique 14 commande en outre, à l'étape 35, un désengagement de la participation de l'aéronef 1 au vol en formation. Par exemple, la circuiterie électronique 14 envoie pour cela une commande appropriée au système de guidage 16 de l'aéronef.

De façon avantageuse encore, la circuiterie électronique 14 est en outre reliée en entrée à une source d'information 15b configurée pour fournir une information d'identification de l'autre aéronef parmi l'aéronef leader 1L et l'aéronef suiveur 1S : lorsque l'aéronef 1 correspond à l'aéronef suiveur 1S, l'autre aéronef correspond à l'aéronef leader 1L et lorsque l'aéronef 1 correspond à l'aéronef leader 1L, l'autre aéronef correspond à l'aéronef suiveur 1S. Selon un mode de réalisation, la source d'information 15b correspond à une interface homme-machine du cockpit de l'aéronef configurée pour permettre à un membre d'équipage de l'aéronef de saisir une information d'identification de l'autre aéronef. Selon une variante, l'information d'identification de l'autre aéronef est déterminée de façon automatique en fonction d'informations relatives au vol de l'aéronef leader 1L et au vol de l'aéronef suiveur 1S. De façon particulière, ces informations comprennent au moins l'une des informations suivantes : un cap de l'aéronef leader ou de l'aéronef suiveur, des informations de position de l'aéronef leader et de l'aéronef suiveur permettant de calculer une distance entre l'aéronef leader et l'aéronef suiveur, etc. De façon particulière, la circuiterie électronique 14 reçoit ou détermine l'information d'identification de l'autre aéronef à l'étape 30 du procédé.

Lorsque l'aéronef 1 correspond à l'aéronef suiveur 1S, la circuiterie électronique 14 utilise l'information d'identification de l'autre aéronef à l'étape 31 pour sélectionner l'altitude barométrique reçue de l'aéronef leader 1L qui correspond alors à l'autre aéronef. Lorsque l'aéronef 1 correspond à l'aéronef leader 1L, la circuiterie électronique 14 utilise l'information d'identification de l'autre aéronef à l'étape 32 pour sélectionner l'altitude barométrique reçue de l'aéronef suiveur 1S qui correspond alors à l'autre aéronef.

Dans le mode particulier de réalisation illustré sur la figure 3, la circuiterie électronique 14 comprend une première partie 14a intégrée dans un système de surveillance anticollision de type TCAS et une deuxième partie 14b indépendante du système de surveillance anticollision de type TCAS. De façon particulière, le système de surveillance anticollision de type TCAS est installé à bord de l'aéronef 1. Le système de surveillance anticollision de type TCAS est configuré, de façon usuelle, pour recevoir les informations d'altitude barométrique de l'aéronef leader 1L et de l'aéronef suiveur 1S, puis pour calculer la différence entre l'altitude barométrique de l'aéronef leader et l'altitude barométrique de l'aéronef suiveur. Les étapes 31, 32 et 33 du procédé sont ainsi mises en œuvre dans la première partie 14a de la circuiterie électronique. La première partie 14a de la circuiterie électronique transmet la différence d'altitudes barométriques calculée à l'étape 33 vers la deuxième partie 14b de la circuiterie électronique. L'étape 34 de détermination d'une incohérence et s'il y a lieu l'étape 35 sont mises en œuvre dans la deuxième partie 14b de la circuiterie électronique.

En pratique, le système de surveillance anticollision de type TCAS reçoit l'information d'altitude barométrique de l'aéronef 1, ainsi que des informations d'altitudes barométriques correspondant respectivement à chaque aéronef parmi un ensemble d'aéronefs environnant l'aéronef 1 (par exemple les aéronefs dont la distance à l'aéronef 1 est inférieure à un seuil de distance). Sur cette base, le système TCAS calcule des différences entre l'altitude barométrique de l'aéronef 1 et respectivement les altitudes barométriques de chacun des aéronefs de l'ensemble d'aéronefs environnant l'aéronef 1. Dans le mode particulier de réalisation illustré sur la figure 3, ces différences d'altitudes barométriques sont transmises par la première partie 14a de la circuiterie électronique, intégrée dans le système TCAS, vers la deuxième partie 14b de la circuiterie électronique. La deuxième partie 14b de la circuiterie électronique utilise l'information d'identification de l'autre aéronef parmi l'aéronef leader 1L et l'aéronef suiveur 1S (reçue de la source d'information 15b ou déterminée de façon automatique par la circuiterie électronique 14) pour sélectionner, parmi ces différences d'altitudes barométriques, celle qui correspond à la différence d'altitude entre l'altitude barométrique de l'aéronef leader 1L et l'altitude barométrique de l'aéronef suiveur 1S.

## Revendications

1. Système de surveillance (10) d'un aéronef (1) participant à un vol en formation dans lequel un aéronef suiveur (1S) vole à proximité d'un vortex (V) engendré par un aéronef leader (1L), l'aéronef (1) correspondant à l'un de l'aéronef suiveur ou de l'aéronef leader, le système de surveillance comprenant de la circuiterie électronique (14) intégrée dans au moins un calculateur avionique de l'aéronef, dans lequel la circuiterie électronique est configurée pour mettre en œuvre de façon répétitive les étapes suivantes pendant la participation de l'aéronef au vol en formation :
- recevoir (31) une information d'altitude barométrique de l'aéronef leader ;
- recevoir (32) une information d'altitude barométrique de l'aéronef suiveur ;
- calculer (33) une différence entre l'altitude barométrique de l'aéronef leader et l'altitude barométrique de l'aéronef suiveur ;
- déterminer (34) une incohérence entre l'altitude barométrique de l'aéronef suiveur (1S) et l'altitude barométrique de l'aéronef leader (1L), dans le contexte du vol en formation, si la différence calculée est supérieure à une valeur de hauteur (H) du vortex (V) à une position courante de l'aéronef suiveur, augmentée d'une marge de hauteur ; et
- en cas de détermination d'une telle incohérence, commander (35) l'émission d'une alerte dans le cockpit de l'aéronef.

2. Système selon la revendication 1, **caractérisé en ce que** la circuiterie électronique (14) comprend une première partie (14a) intégrée dans un système de surveillance anticollision de type TCAS et une deuxième partie (14b) indépendante du système de surveillance anticollision de type TCAS, dans lequel l'étape (33) de calcul de la différence entre l'altitude barométrique de l'aéronef leader (1L) et l'altitude barométrique de l'aéronef suiveur (1S) est mise en œuvre dans la première partie (14a) de la circuiterie électronique et l'étape (34) de détermination d'une incohérence entre l'altitude barométrique de l'aéronef suiveur et l'altitude barométrique de l'aéronef leader est mise en œuvre dans la deuxième partie (14b) de la circuiterie électronique.

3. Système selon l'une des revendications 1 ou 2, **caractérisé en ce que** la circuiterie électronique (14) est en outre configurée pour mettre en œuvre une étape (30) de réception d'une information d'identification de l'aéronef leader (1L) lorsque l'aéronef (1) correspond à l'aéronef suiveur (1S) ou une étape (30) de réception d'une information d'identification de l'aéronef suiveur (1S) lorsque l'aéronef (1) correspond à l'aéronef leader (1L).

4. Système selon l'une quelconque des revendications 1 ou 2, **caractérisé en ce que** la circuiterie électronique (14) est en outre configurée pour déterminer de façon automatique une information d'identification de l'aéronef leader (1L) lorsque l'aéronef (1) correspond à l'aéronef suiveur (1S) ou une information d'identification de l'aéronef suiveur (1S) lorsque l'aéronef (1) correspond à l'aéronef leader (1L), en fonction d'informations reçues de l'aéronef suiveur et de l'aéronef leader.

5. Système selon l'une quelconque des revendications précédentes, **caractérisé en ce que** la circuiterie électronique (14) est en outre configurée pour commander un désengagement de la participation de l'aéronef au vol en formation en cas de détermination d'une incohérence entre l'altitude barométrique de l'aéronef suiveur et l'altitude barométrique de l'aéronef leader.

6. Procédé de surveillance d'un aéronef (1) participant à un vol en formation dans lequel un aéronef suiveur (1S) vole à proximité d'un vortex (V) engendré par un aéronef leader (1L), l'aéronef (1) correspondant à l'un de l'aéronef suiveur (1S) ou de l'aéronef leader (1L), le procédé comprenant les étapes suivantes mises en œuvre de façon répétitive par de la circuiterie électronique (14) intégrée dans au moins un calculateur avionique de l'aéronef, pendant la participation de l'aéronef (1) au vol en formation :
- recevoir (31) une information d'altitude barométrique de l'aéronef leader ;
- recevoir (32) une information d'altitude barométrique de l'aéronef suiveur ;
- calculer (33) une différence entre l'altitude barométrique de l'aéronef leader (1L) et l'altitude barométrique de l'aéronef suiveur (1S) ;
- déterminer (34) une incohérence entre l'altitude barométrique de l'aéronef suiveur et l'altitude barométrique de l'aéronef leader, dans le contexte du vol en formation, si la différence calculée est supérieure à une valeur de hauteur (H) du vortex (V) à une position courante de l'aéronef suiveur, augmentée d'une marge de hauteur ; et
- en cas de détermination d'une telle incohérence, commander (35) l'émission d'une alerte dans le cockpit de l'aéronef.

7. Procédé selon la revendication 6, **caractérisé en ce que** la circuiterie électronique (14) comprenant une première partie (14a) intégrée dans un système de surveillance anticollision de type TCAS et une deuxième partie (14b) indépendante du système de surveillance anticollision de type TCAS, l'étape (33) de calcul de la différence entre l'altitude barométrique de l'aéronef leader et l'altitude barométrique de l'aéronef suiveur est mise en œuvre dans la première partie (14a) de la circuiterie électronique (14) et l'étape (34) de détermination d'une incohérence entre l'altitude barométrique de l'aéronef suiveur et l'altitude barométrique de l'aéronef leader est mise en œuvre dans la deuxième partie (14b) de la circuiterie électronique.

8. Procédé selon l'une des revendications 6 ou 7, **caractérisé en ce qu'**il comprend en outre une étape (30) de réception d'une information d'identification de l'aéronef leader (1L) lorsque l'aéronef (1) correspond à l'aéronef suiveur (1S) ou une étape (30) de réception d'une information d'identification de l'aéronef suiveur (1S) lorsque l'aéronef (1) correspond à l'aéronef leader (1L).

9. Procédé selon l'une des revendications 6 ou 7, **caractérisé en ce qu'**il comprend en outre une étape (30) de détermination automatique d'une information d'identification de l'aéronef leader (1L) lorsque l'aéronef (1) correspond à l'aéronef suiveur (1S) ou d'une information d'identification de l'aéronef suiveur (1S) lorsque l'aéronef (1) correspond à l'aéronef leader (1L), en fonction d'informations reçues de l'aéronef suiveur et de l'aéronef leader.

10. Aéronef (1), **caractérisé en ce qu'**il comprend un système de surveillance (10) selon l'une quelconque des revendications 1 à 5.

## Patentansprüche

1. Überwachungssystem (10) eines Flugzeugs (1), das an einem Formationsflug teilnimmt, bei dem ein Folgeflugzeug (1S) in der Nähe eines Wirbels (V) fliegt, der durch ein Führungsflugzeug (1L) erzeugt wird, wobei das Flugzeug (1) dem Folgeflugzeug oder dem Führungsflugzeug entspricht, wobei das Überwachungssystem eine elektronische Schaltungsanordnung (14) umfasst, die in mindestens einen Avionikrechner des Flugzeugs integriert ist, wobei die elektronische Schaltungsanordnung dazu ausgelegt ist, die folgenden Schritte während der Teilnahme des Flugzeugs an dem Formationsflug wiederholt durchzuführen:
- Empfangen (31) einer Information zur barometrischen Höhe des Führungsflugzeugs;
- Empfangen (32) einer Information zur barometrischen Höhe des Folgeflugzeugs;
- Berechnen (33) einer Differenz zwischen der barometrischen Höhe des Führungsflugzeugs und der barometrischen Höhe des Folgeflugzeugs;
- Ermitteln (34) einer Inkohärenz zwischen der barometrischen Höhe des Folgeflugzeugs (1S) und der barometrischen Höhe des Führungsflugzeugs (1L) im Kontext des Formationsflugs, wenn die berechnete Differenz größer als ein Wert der Höhe (H) des Wirbels (V) an einer aktuellen Position des Folgeflugzeugs, zuzüglich einer Höhenmarge, ist; und
- im Fall der Ermittlung einer solchen Inkohärenz, Steuern (35) der Ausgabe einer Warnung im Cockpit des Flugzeugs.

2. System nach Anspruch 1, **dadurch gekennzeichnet, dass** die elektronische Schaltungsanordnung (14) einen ersten Teil (14a), der in ein Kollisionswarnsystem vom Typ TCAS integriert ist, und einen zweiten Teil (14b), der von dem Kollisionswarnsystem vom Typ TCAS unabhängig ist, umfasst, wobei der Schritt (33) des Berechnens der Differenz zwischen der barometrischen Höhe des Führungsflugzeugs (1L) und der barometrischen Höhe des Folgeflugzeugs (1S) in dem ersten Teil (14a) der elektronischen Schaltungsanordnung durchgeführt wird und der Schritt (34) des Ermittelns einer Inkohärenz zwischen der barometrischen Höhe des Folgeflugzeugs und der barometrischen Höhe des Führungsflugzeugs in dem zweiten Teil (14b) der elektronischen Schaltungsanordnung durchgeführt wird.

3. System nach Anspruch 1 oder 2, **dadurch gekennzeichnet, dass** die elektronische Schaltungsanordnung (14) ferner dazu ausgelegt ist, einen Schritt (30) des Empfangens einer Information zur Identifikation des Führungsflugzeugs (1L) durchzuführen, wenn das Flugzeug (1) dem Folgeflugzeug (1S) entspricht, oder einen Schritt (30) des Empfangens einer Information zur Identifikation des Folgeflugzeugs (1S), wenn das Flugzeug (1) dem Führungsflugzeug (1L) entspricht.

4. System nach einem der Ansprüche 1 oder 2, **dadurch gekennzeichnet, dass** die elektronische Schaltungsanordnung (14) ferner dazu ausgelegt ist, in Abhängigkeit von den von dem Folgeflugzeug und dem Führungsflugzeug empfangenen Informationen, automatisch eine Information zur Identifikation des Führungsflugzeugs (1L) zu ermitteln, wenn das Flugzeug (1) dem Folgeflugzeug (1S) entspricht, oder eine Information zur Identifikation des Folgeflugzeugs (1S), wenn das Flugzeug (1) dem Führungsflugzeug (1L) entspricht.

5. System nach einem der vorhergehenden Ansprüche, **dadurch gekennzeichnet, dass** die elektronische Schaltungsanordnung (14) ferner dazu ausgelegt ist, im Fall der Ermittlung einer Inkohärenz zwischen der barometrischen Höhe des Folgeflugzeugs und der barometrischen Höhe des Führungsflugzeugs ein Aufheben der Teilnahme des Flugzeugs an dem Formationsflug zu steuern.

6. Verfahren zur Überwachung eines Flugzeugs (1), das an einem Formationsflug teilnimmt, bei dem ein Folgeflugzeug (1S) in der Nähe eines Wirbels (V) fliegt, der durch ein Führungsflugzeug (1L) erzeugt wird, wobei das Flugzeug (1) dem Folgeflugzeug (1S) oder dem Führungsflugzeug (1L) entspricht, wobei das Verfahren die folgenden Schritte umfasst, die von einer elektronischen Schaltungsanordnung (14), die in mindestens einen Avionikrechner des Flugzeugs integriert ist, während der Beteiligung des Flugzeugs (1) an dem Formationsflug wiederholt durchgeführt werden:
- Empfangen (31) einer Information zur barometrischen Höhe des Führungsflugzeugs;
- Empfangen (32) einer Information zur barometrischen Höhe des Folgeflugzeugs;
- Berechnen (33) einer Differenz zwischen der barometrischen Höhe des Führungsflugzeugs (1L) und der barometrischen Höhe des Folgeflugzeugs (1S);
- Ermitteln (34) einer Inkohärenz zwischen der barometrischen Höhe des Folgeflugzeugs und der barometrischen Höhe des Führungsflugzeugs im Kontext des Formationsflugs, wenn die berechnete Differenz größer als ein Wert der Höhe (H) des Wirbels (V) an einer aktuellen Position des Folgeflugzeugs, zuzüglich einer Höhenmarge, ist; und
- im Fall der Ermittlung einer solchen Inkohärenz, Steuern (35) der Ausgabe einer Warnung im Cockpit des Flugzeugs.

7. Verfahren nach Anspruch 6, **dadurch gekennzeichnet, dass** die elektronische Schaltungsanordnung (14) einen ersten Teil (14a), der in ein Kollisionswarnsystem vom Typ TCAS integriert ist, und einen zweiten Teil (14b), der von dem Kollisionswarnsystem vom Typ TCAS unabhängig ist, umfasst, wobei der Schritt (33) des Berechnens der Differenz zwischen der barometrischen Höhe des Führungsflugzeugs und der barometrischen Höhe des Folgeflugzeugs in dem ersten Teil (14a) der elektronischen Schaltungsanordnung (14) durchgeführt wird und der Schritt (34) des Ermittelns einer Inkohärenz zwischen der barometrischen Höhe des Folgeflugzeugs und der barometrischen Höhe des Führungsflugzeugs in dem zweiten Teil (14b) der elektronischen Schaltungsanordnung durchgeführt wird.

8. Verfahren nach einem der Ansprüche 6 oder 7, **dadurch gekennzeichnet, dass** es ferner einen Schritt (30) des Empfangens einer Information zur Identifikation des Führungsflugzeugs (1L), wenn das Flugzeug (1) dem Folgeflugzeug (1S) entspricht, oder einen Schritt (30) des Empfangens einer Information zur Identifikation des Folgeflugzeugs (1S), wenn das Flugzeug (1) dem Führungsflugzeug (1L) entspricht, umfasst.

9. Verfahren nach einem der Ansprüche 6 oder 7, **dadurch gekennzeichnet, dass** es ferner, in Abhängigkeit von den von dem Folgeflugzeug und dem Führungsflugzeug empfangenen Informationen, einen Schritt (30) des automatischen Ermittelns einer Information zur Identifikation des Führungsflugzeugs (1L), wenn das Flugzeug (1) dem Folgeflugzeug (1S) entspricht, oder einer Information zur Identifikation des Folgeflugzeugs (1S), wenn das Flugzeug (1) dem Führungsflugzeug (1L) entspricht, umfasst.

10. Flugzeug (1), **dadurch gekennzeichnet, dass** es ein Überwachungssystem (10) nach einem der Ansprüche 1 bis 5 umfasst.

## Claims

1. System (10) for monitoring an aircraft (1) participating in a formation flight in which a trailing aircraft (1S) is flying in proximity to a vortex (V) generated by a lead aircraft (1L), the aircraft (1) corresponding to one of the trailing aircraft or lead aircraft, the monitoring system comprising electronic circuitry (14) integrated into at least one avionics computer of the aircraft, wherein the electronic circuitry is configured to repeatedly implement the following steps during the participation of the aircraft in the formation flight:
- receiving (31) barometric altitude information from the lead aircraft;
- receiving (32) barometric altitude information from the trailing aircraft;
- calculating (33) a difference between the barometric altitude of the lead aircraft and the barometric altitude of the trailing aircraft;
- determining (34) that there is an inconsistency between the barometric altitude of the trailing aircraft (1S) and the barometric altitude of the lead aircraft (1L), in the context of the formation flight, if the calculated difference is greater than a height value (H) of the vortex (V) at a current position of the trailing aircraft, increased by a height margin; and
- if it is determined that such an inconsistency exists, commanding (35) an alert to be generated in the cockpit of the aircraft.

2. System according to Claim 1, **characterized in that** the electronic circuitry (14) comprises a first part (14a) integrated into a traffic collision avoidance system and a second part (14b) independent of the traffic collision avoidance system, in which system the step (33) of calculating the difference between the barometric altitude of the lead aircraft (1L) and the barometric altitude of the trailing aircraft (1S) is implemented in the first part (14a) of the electronic circuitry and the step (34) of determining an inconsistency between the barometric altitude of the trailing aircraft and the barometric altitude of the lead aircraft is implemented in the second part (14b) of the electronic circuitry.

3. System according to either of Claims 1 and 2, **characterized in that** the electronic circuitry (14) is further configured to implement a step (30) of receiving identification information of the lead aircraft (1L) when the aircraft (1) corresponds to the trailing aircraft (1S) or a step (30) of receiving identification information of the trailing aircraft (1S) when the aircraft (1) corresponds to the lead aircraft (1L).

4. System according to either of Claims 1 and 2, **characterized in that** the electronic circuitry (14) is further configured to automatically determine identification information of the lead aircraft (1L) when the aircraft (1) corresponds to the trailing aircraft (1S) or identification information of the trailing aircraft (1S) when the aircraft (1) corresponds to the lead aircraft (1L), depending on information received from the trailing aircraft and lead aircraft.

5. System according to any of the preceding claims, **characterized in that** the electronic circuitry (14) is further configured to command disengagement of the participation of the aircraft in the formation flight if it is determined that there is an inconsistency between the barometric altitude of the trailing aircraft and the barometric altitude of the lead aircraft.

6. Method for monitoring an aircraft (1) participating in a formation flight in which a trailing aircraft (1S) is flying in proximity to a vortex (V) generated by a lead aircraft (1L), the aircraft (1) corresponding to one of the trailing aircraft (1S) or lead aircraft (1L), the method comprising the following steps repeatedly implemented by electronic circuitry (14) integrated into at least one avionics computer of the aircraft, during the participation of the aircraft (1) in the formation flight:
- receiving (31) barometric altitude information from the lead aircraft;
- receiving (32) barometric altitude information from the trailing aircraft;
- calculating (33) a difference between the barometric altitude of the lead aircraft (1L) and the barometric altitude of the trailing aircraft (1S);
- determining (34) that there is an inconsistency between the barometric altitude of the trailing aircraft and the barometric altitude of the lead aircraft, in the context of the formation flight, if the calculated difference is greater than a height value (H) of the vortex (V) at a current position of the trailing aircraft, increased by a height margin; and
- if it is determined that such an inconsistency exists, commanding (35) an alert to be generated in the cockpit of the aircraft.

7. Method according to Claim 6, **characterized in that**, the electronic circuitry (14) comprising a first part (14a) integrated into a traffic collision avoidance system and a second part (14b) independent of the traffic collision avoidance system, the step (33) of calculating the difference between the barometric altitude of the lead aircraft and the barometric altitude of the trailing aircraft is implemented in the first part (14a) of the electronic circuitry (14) and the step (34) of determining an inconsistency between the barometric altitude of the trailing aircraft and the barometric altitude of the lead aircraft is implemented in the second part (14b) of the electronic circuitry.

8. Method according to either of Claims 6 and 7, **characterized in that** it further comprises a step (30) of receiving identification information of the lead aircraft (1L) when the aircraft (1) corresponds to the trailing aircraft (1S) or a step (30) of receiving identification information of the trailing aircraft (1S) when the aircraft (1) corresponds to the lead aircraft (1L).

9. Method according to either of Claims 6 and 7, **characterized in that** it further comprises a step (30) of automatically determining identification information of the lead aircraft (1L) when the aircraft (1) corresponds to the trailing aircraft (1S) or identification information of the trailing aircraft (1S) when the aircraft (1) corresponds to the lead aircraft (1L), depending on information received from the trailing aircraft and lead aircraft.

10. Aircraft (1), **characterized in that** it comprises a monitoring system (10) according to any of Claims 1 to 5.
